# EUROPEAN PATENT APPLICATION

(11) **EP 4 535 477 A2**
(43) Date of publication of application: **09.04.2025**
(21) Application number: 24223214.8
(22) Date of filing: 21.12.2022
(51) Int. Cl.: H01M 10/04

(54) **APPARATUS AND METHOD FOR MAKING A COIL, PREFERABLY FOR AN ELECTROCHEMICAL CELL INTENDED FOR THE PRODUCTION OF BATTERIES**

(30) Priority: 21.12.2021 IT 202100032009; 21.12.2021 IT 202100032012; 21.12.2021 IT 202100032015; 22.04.2022 IT 202200008033; 22.04.2022 IT 202200008102
(62) Divisional of application: 22846940.9
(71) Applicant: G.D S.p.A., 40133 Bologna (BO) (IT)
(72) Inventor: BIONDI, Andrea, 40133 Bologna (BO) (IT); CAMPAGNOLI, Enrico, 40133 Bologna (BO) (IT); CAVAZZA, Luca, 40133 Bologna (BO) (IT); NANNI, Fabrizio, 40133 Bologna (BO) (IT); BERTUZZI, Ivanoe, 40133 Bologna (BO) (IT)
(74) Representative: Locas, Davide

(57) **Abstract**

An apparatus (100) for making a coil (B) comprises a feed unit (2) configured to feed at least one strip-shaped article (N) formed by a plurality of strips (N1, N2, N3, N4) and a winding unit (1). The winding unit includes a plurality of winding heads (10) and a movement device (3) of said winding heads (10) configured to displace said winding heads (10) along a working path (P). The apparatus further comprises a storage device (4) configured so as to store a variable amount of said at least one of said strips (N1, N2, N3, N4) and an actuating device of the storage device (4) which displaces said storage device (4) to vary the stored amount of strip.

## Description

The present invention relates to an apparatus for making a coil, for instance of the type formed by winding a strip-shaped article including a strip or a plurality of overlapping strips.

The invention also relates to a method for making the coil.

The present invention is preferably, though non-exclusively, applied to the field of electrochemical cell production, for the manufacture of which a winding of a strip-shaped article is used.

In particular, in the relevant technical field, it is known to combine conductor strips and separator strips in layers in order to form an anode and cathode structure. The article made by overlapping the aforesaid layers is thus wound into a coil and used for making the electrochemical cell itself. An example of an apparatus and method for making batteries by winding conductor strips and separator strips is disclosed in WO2010023525A1.

In the present description as well as in the accompanying claims, certain terms and expressions are deemed to have the meaning expressed in the following definitions, unless expressly stated otherwise.

The term "strip-shaped article" refers to any solid product which, within an industrial production line, is in the form of an elongated strip or band, i.e. an element in which the longitudinal extension is significantly greater than its transverse extension. The strip-shaped article may be formed from a single strip or band of material, or from the overlapping of several strips arranged in layers. The strip-shaped article also has features that provide for some flection during the advancement thereof along a relative production line.

The strip-shaped article may for instance be made by overlapping conductor and insulating layers alternating with each other and may be intended to form a sandwich to be wound for making a coil intended for producing electrochemical cells.

The term "winding" refers to creating a spiral structure by rotating a strip, a band or, more generally, a strip-shaped article around an axis, a flat surface or other structure. The strip-shaped article will form, by winding, one or more turns around the axis or structure.

The term "coil" refers to any spiral structure formed by winding a strip, a band or, more generally, a strip-shaped article around an axis, flat surface or other winding structure. Depending on the structure around which the strip-shaped article is wound, the overall shape of the coil may be substantially cylindrical rather than flattened or otherwise shaped.

As mentioned above, the coil may be applied not only to the field of electrochemical cells but also to other fields, such as the field of conductors where coil-shaped structures may equally be used. The term "closed path" refers to a path run by a winding head or other element in which the start point and end point of the path substantially coincide.

The term "continuous" related to an expression of motion refers to an operation that occurs without interruption, without any stop or interruption in the concerned operation. In particular, referring to the movement of a strip or other element, the term "continuous" means that the strip is never stopped during its movement.

The term "substantially constant" related to a measure or amount, such as the speed of displacement of an object, means that such measure or amount maintains, over time, a value that preferably varies by a maximum of ±10%, preferably by a maximum of ±5%, preferably by a maximum of ±2%.

The term "integrally" related to the movement of two or more elements means that such elements perform substantially the same movement and substantially simultaneously. In other words, two integral elements move together, as a single body, even though one is not necessarily joined or constrained to the other. It may in fact be provided that the respective movement systems of the two elements are coordinated in such a way as to move the two elements together, as required. In addition, it may be provided to use a temporary constraint between the two elements, which, for instance, joins them together at some steps, making them move together, and separates them again, making them move independently of each other.

It should also be specified that the expression "displace/displacing an object between a first position and a second position" refers both to the displacement from the first position to the second position as well as to the displacement from the second position to the first position.

Such definition applies at all similarly to expressions of motion, such as transferring or moving a generic object between two positions or between two areas or even between two different operating configurations.

The Applicant, in the context of the constant need to increase performance and efficiency of production processes, has preliminarily observed how, in a production line for making a coil, the advancement speed of the strip-shaped article in relation to the unit performing the winding may represent an element which significantly limits the production capacity of the line itself.

This limitation is even more critical if a high degree of precision in forming the coil is required. In particular, the Applicant observed that in many applications, such as in the field of electrochemical cell production, a high degree of precision in winding geometry must be ensured in order to guarantee the required performance of the finished product.

Such requirement results in an overall slowdown in the production line, as it is necessary to interrupt the advancement of the strip-shaped article in order to ensure the necessary winding accuracy.

The Applicant noted, however, that such solution results in the formation of tension states on the strip-shaped article due to stop and/or restart thereof, which may compromise the manufacturing quality of the final product obtained by means of the coil formed by the winding of the article.

In order to increase the operating speed for making a coil by means of a strip-shaped article, the Applicant therefore realised that this could be achieved by also setting in motion, in addition to the strip-shaped article, the winding heads used to wind it.

The Applicant also observed that by using more than one winding head, it is possible to work on two separate coils at the same time and/or to have one of the winding heads perform reset actions while the other one performs the processing.

The Applicant hence further realised that it is possible to increase the speed in the production of the coil, compared to known solutions, if the strip movement is not interrupted during the different operating steps of the process based on which the apparatus operates.

Finally, the Applicant found that it is possible to avoid interruptions as the strip advances by providing for the possibility of storing an appropriate amount thereof at certain steps, subsequently recovering the strip thus stored in later steps.

Thanks to these features, the strip may advance continuously, thus avoiding tension states on the strip while allowing for an increase in the winding speed of the strip and making it not necessary to stop it during such operation.

Therefore, the present invention, in a first aspect thereof, relates to an apparatus for making a coil, preferably for an electrochemical cell intended for producing batteries.

Preferably said apparatus comprises a feed unit configured to feed at least one strip-shaped article, preferably comprising one or more strips including conductor strips and separator strips.

Said feed unit preferably comprises an outlet section through which said strip-shaped article is fed to said winding unit and, preferably, an inlet section.

Such an inlet section is preferably adapted to receive said at least one strip from a respective delivery device.

The apparatus preferably comprises a winding unit.

Said winding unit preferably includes a plurality of winding heads, each winding head of said plurality being configured to wind said strip-shaped article so as to make said coil.

Preferably, said winding unit comprises a device for moving said winding heads which is configured to displace said winding heads along a working path.

The apparatus preferably comprises a storage device which is configured to store a variable amount of said at least one strip-shaped article preferably between said inlet section and said outlet section. Preferably, the apparatus comprises an actuating device of the storage device configured to actuate, preferably by displacing it, the storage device in such a way as to vary the stored amount of strip. Thanks to these features, it is possible to provide steps during which, while at least one of the strips continues to advance, this is not supplied, and in particular wound, to the winding heads. The cutting steps can thereby be better managed and/or it is possible to provide strips having different lengths in the case of a strip-shaped article consisting of a plurality of overlapping layers.

It is also possible to concurrently store all the strips forming the strip-shaped article, for instance when the movement device, and thus the movable portion, move along the operative segment, and quickly wind the stored strip and/or exploit the amount of stored strip to optimally adjust the strip tension.

The present invention, in a second aspect thereof, relates to a method for making a coil, preferably for an electrochemical cell intended for producing batteries, said coil being made by winding at least one strip-shaped article.

Preferably, said method comprises providing a plurality of movable winding heads along a working path.

The method preferably provides winding said strip-shaped article by said winding head. Preferably, the method comprises storing a variable amount of said at least one strip-shaped article at a position upstream of said winding head on which said strip-shaped article is wound, said stored amount being preferably variable during the displacement of said winding heads.

Based on this aspect it is possible to reach the same advantages as described in relation to the previous aspect.

The present invention, in a third aspect of, relates to an apparatus for making a coil, preferably for an electrochemical cell intended for producing batteries.

Preferably said apparatus comprises a feed unit configured to feed at least one strip-shaped article, preferably including one or more strips comprising conductor strips and separator strips, displacing said strip-shaped article along a feed direction.

The apparatus preferably comprises a winding unit.

Preferably the winding unit includes a plurality of winding heads.

Preferably, the winding unit includes a device for moving said winding heads configured to displace said winding heads along a working path.

Preferably each winding head supports a grabbing device which is configured to grab a portion of said strip and is configured to wind said strip to make said coil.

Preferably said movement device is further configured so as to displace a respective winding head, when it is grabbing said strip portion, along an operative segment of said working path in a direction discordant to said feed direction.

Thanks to these features, it is possible to reduce the length of the strip-shaped article, or at least keep it as short as possible, while the strip is being wound. Situations that may lead to tension states on the strip are thereby reduced and high winding speeds are generally possible.

The present invention, in a fourth aspect thereof, relates to a method for making a coil, preferably for an electrochemical cell intended for producing batteries, said coil being made by winding at least one strip-shaped article.

The method preferably comprises providing a plurality of winding heads movable along a working path.

Preferably, it is provided to move said strip-shaped article in a feed direction so as to feed said strip-shaped article to one of said winding heads.

Preferably, the method includes grabbing a portion of said strip-shaped article by means of a grabbing device of said winding head.

Preferably, the method involves displacing said winding head, while it is grabbing said portion of the strip-shaped article, in a direction discordant to said feed direction, along an operative segment of said working path.

Based on this aspect it is possible to reach the same advantages as described in relation to the previous aspect.

The present invention, in a fifth aspect thereof, relates to an apparatus for making a coil, preferably for an electrochemical cell intended for producing batteries.

Preferably said apparatus comprises a feed unit configured to feed at least one strip-shaped article, preferably a plurality of strips including conductor strips and separator strips.

The apparatus preferably includes a winding unit.

Preferably, the winding unit includes a plurality of winding heads, each winding head being configured to wind said strip-shaped article around a respective winding axis so as to make said coil.

In addition, the winding unit preferably comprises a device for moving said winding heads configured to displace said winding heads along a working path.

Preferably, the winding heads are displaced according to a trajectory including at least one rotation around a rotation axis of said movement device, said rotation axis being different from said winding axis, and preferably a translation and/or rotation around a further axis, different from said rotation axis and said winding axis.

Thanks to these features, it is possible to carry out, by means of suitable kinematic mechanisms, a cyclic movement of the rotation heads which may be obtained by the rotation around the rotation axis of the movement device, with further movement of the heads obtained by a translation and/or by further rotation movements.

It will thereby be possible to obtain, with a solution that is of simple construction and, as such, capable of achieving high speeds, the necessary trajectories for the winding heads in order to wind the strip during the movement of the head itself, without this resulting in tension states or movements that are difficult for the strip to control.

It will be appreciated that the trajectory run by the winding head may include rotation and translation/rotation in sequence, or a combined rototranslation movement including such rotations/translation.

The present invention, in a sixth aspect thereof, relates to a method for making a coil, preferably for an electrochemical cell intended for producing batteries, said coil being made by winding at least one strip-shaped article.

Said method preferably comprises providing a plurality of winding heads.

Preferably, it is provided to wind said strip-shaped article around a winding axis by one of said winding heads.

Preferably, the method comprises moving said winding heads according to a trajectory formed at least by a rotation around a rotation axis of said movement device, said rotation axis being different from said winding axis, and preferably a translation and/or a rotation around a further axis, different from said rotation axis and said winding axis.

Based on this aspect it is possible to reach the same advantages as described in relation to the previous aspect.

The present invention, in a seventh aspect thereof, relates to an apparatus for making a coil, preferably for an electrochemical cell intended for producing batteries.

Preferably said apparatus comprises a feed unit configured to feed at least one strip-shaped article, preferably comprising one or more strips including conductor strips and separator strips. Preferably, said feed unit comprises a movable portion that includes an outlet section through which said strip-shaped article exits from said feed unit.

The apparatus also preferably comprises a winding unit configured to receive said strip-shaped article from said outlet section.

The winding unit preferably includes a plurality of winding heads.

Preferably the winding unit preferably includes a device for moving said winding heads. Preferably each winding head is configured to wind said strip-shaped article so as to make said coil.

Said winding heads and said movable portion are preferably both movable.

Preferably, said movement device is configured to move said winding heads along a working path so as to maintain a respective winding head, on which said strip-shaped article is wound, at a predetermined distance from said movable portion while said winding head is moving.

Thanks to such features, it is possible to control the distance between the feed unit and the winding head during the different steps of the coil production, providing for the appropriate distance in order to carry out the winding while minimising tension states and allowing, as required, for the cutting of the strip-shaped article.

The present invention, in an eighth aspect thereof, relates to a method for making a coil, preferably for an electrochemical cell intended for producing batteries, said coil being made by winding at least one strip-shaped article.

Said method preferably comprises providing a plurality of winding heads movable along a working path.

Preferably, the method provides feeding said strip-shaped article to one of said winding heads through an outlet section of a feed unit.

Preferably, the method comprises winding said strip-shaped article by said winding head to which said strip-shaped article is fed.

Preferably, it is provided to simultaneously move said outlet section and said winding head to which said strip-shaped article is fed, keeping them at a predetermined distance.

Based on this aspect it is possible to reach the same advantages as described in relation to the previous aspect.

The present invention, in a ninth aspect thereof, relates to an apparatus for making a coil, preferably for an electrochemical cell intended for producing batteries.

Preferably said apparatus comprises a feed unit configured to feed at least one strip-shaped article, preferably including one or more strips comprising conductor strips and separator strips;

Said apparatus comprises a winding unit.

The winding unit preferably includes a plurality of winding heads, each winding head being preferably configured to wind said strip-shaped article so as to make said coil.

Preferably, the winding unit may comprise a device for moving said winding heads configured to displace said winding heads along a working path.

Preferably, said plurality of winding heads comprises at least a first winding head and a second winding head.

Said movement device is preferably configured to vary a distance between said first winding head and said second winding head along said working path.

Thanks to these features and, in particular, to the possibility of varying the distance between the two winding heads, it is possible to efficiently manage the steps of manufacturing the coil, in particular by varying the distance between the two heads between the steps in which winding takes place and those in which the strip-shaped article is cut.

The present invention, in a tenth aspect thereof, relates to a method for making a coil, preferably for an electrochemical cell intended for producing batteries, said coil being made by winding at least one strip-shaped article.

Preferably, said method comprises providing a plurality of movable winding heads along a working path.

Preferably said plurality of winding heads comprises at least a first winding head and a second winding head.

The method preferably comprises winding said strip-shaped article by said first winding head and/or said second winding head.

It is also preferably provided to vary a distance between said first winding head and said second winding head along said working path.

Based on this aspect it is possible to reach the same advantages as described in relation to the previous aspect.

The present invention, in an eleventh aspect thereof, relates to an apparatus for making a coil, preferably for an electrochemical cell intended for producing batteries.

Preferably said apparatus comprises a feed unit configured to feed at least one strip-shaped article, preferably comprising one or more strips including conductor strips and separator strips. Preferably said apparatus comprises a winding unit.

Said winding unit preferably includes a plurality of winding heads.

Preferably, the winding unit comprises a device for moving said winding heads configured to displace said winding heads along a working path.

Preferably each winding head is configured to wind said strip-shaped article so as to make said coil.

Preferably said winding head is movable along said working path in such a way that said at least one strip-shaped article is subjected to a substantially constant tension during the winding of said strip-shaped article by a respective winding head and as a result of the movement of said winding head, and preferably in at least a segment between said feed unit and said winding head.

The term "substantially constant tension" means that the tension remains constant with a variation of no more than ±5% during the operating steps of the apparatus. Furthermore, in the context of the present invention, the constant tension state can preferably be expressed as a constant speed of the strip-shaped article during the steps of feeding and winding the strip.

Thanks to these features, it is possible to submit the strip-shaped article to a substantially constant tension, particularly when manufacturing the coil, due to the fact that winding takes place while the winding head is being displaced.

Thanks to these features, it is possible to submit the strip-shaped article to a substantially constant tension, particularly when manufacturing the coil, due to the fact that winding takes place while the winding head is being displaced.

It is thereby possible to both increase the productivity of the apparatus, in terms of coils wound per unit of time, and improve the characteristics of the winding, which can be carried out in a more precise and regular way.

The present invention, in a twelfth aspect thereof, relates to a method for making a coil, preferably for an electrochemical cell intended for producing batteries, said coil being made by winding at least one strip-shaped article.

Said method preferably comprises providing a plurality of winding heads movable along a working path.

Preferably, the method provides winding said strip-shaped article by a winding head of said plurality.

Preferably, the method comprises moving said winding head by which said strip-shaped article is wound in such a way that said strip-shaped article is subjected to a substantially constant tension. Based on this aspect it is possible to reach the same advantages as described in relation to the previous aspect.

The present invention, in a thirteenth aspect thereof, relates to an apparatus for making a coil, preferably for an electrochemical cell intended for producing batteries.

Preferably said apparatus comprises a feed unit configured to feed at least one strip-shaped article preferably formed by a plurality of strips preferably including conductor strips and separator strips. The apparatus preferably comprises a winding unit.

Said winding unit preferably includes a plurality of winding heads.

Preferably, the winding unit includes a device for moving said winding heads configured to displace said winding heads along a working path.

Preferably each winding head is configured to wind said strip-shaped article so as to make said coil.

Preferably at least one of said strips is continuously fed to said winding head by said feed unit.

Thanks to such features, it is possible to make the coil without interrupting the strip feeding, thus avoiding interruptions in the strip movement which could generate undesired tension states or otherwise reduce the productivity of the apparatus, always to the benefit of the productivity and quality of the product made.

The present invention, in a fourteenth aspect thereof, relates to a method for making a coil, preferably for an electrochemical cell intended for producing batteries, said coil being made by winding at least one strip-shaped article.

Preferably said method comprises combining a plurality of layers, preferably including conductor strips and separator strips, in such a way as to form said strip-shaped article.

Preferably at least one of these strips is continuously fed.

The method preferably comprises providing a plurality of winding heads movable along a working path.

It is preferably provided to wind said strip-shaped article by said winding head.

Based on this aspect it is possible to reach the same advantages as described in relation to the previous aspect.

The present invention, in a fifteenth aspect thereof, relates to an apparatus for making a coil, preferably for an electrochemical cell intended for producing batteries. Preferably, the apparatus comprises a feed unit configured to feed a strip-shaped article which preferably includes at least one or more strips which preferably include conductor strips and separator strips.

Preferably, the apparatus also comprises a winding unit, which preferably includes a plurality of winding heads.

Preferably, the apparatus comprises a device for moving said winding heads preferably configured to displace said winding heads along a working path.

Each winding head is preferably configured to wind said strip so as to create said coil during a displacement, carried out by said movement device, of said winding head along an operative segment of said working path.

Thanks to these features, the apparatus for making a coil can wind the strip-shaped article without the need to interrupt the feeding of the article, as the winding head can move while the strip-shaped article is being wound.

This makes it possible to operate, on the one hand, at higher speeds than known solutions, while at the same time ensuring the required quality in the coil structure, thanks to the possibility of controlling the tension acting on the strip-shaped article by acting on the winding speed and on the displacement of the winding heads.

The present invention, in a sixteenth aspect thereof, relates to a method for making a coil, preferably for an electrochemical cell intended for producing batteries, said coil being made by winding at least one strip-shaped article.

The method preferably comprises providing a plurality of winding heads movable along a working path.

Furthermore, the method preferably includes winding said strip-shaped article by said winding head during a displacement of said winding head along an operative segment of said working path. The method according to such an aspect also allows to make the coils at a higher speed and without interruptions in the path of the strip-shaped article, thanks to the possibility of winding while the winding head itself is running along a working path and, in particular, a specific segment thereof. In fact, the displacement of the winding head may be coordinated with the feeding of the strip-shaped article to the winding heads such that it is not necessary to interrupt the feeding of the strip-shaped article, or of the relative strips possibly forming it, during the process of manufacturing the coil.

The present invention, in a seventeenth aspect thereof, relates to an apparatus for making a coil, preferably for an electrochemical cell intended for producing batteries.

Preferably said apparatus comprises a feed unit configured to feed at least one strip-shaped article, preferably comprising one or more strips including conductor strips and separator strips. Preferably said apparatus comprises a winding unit that includes a plurality of winding heads. Preferably, each winding head supports a grabbing device which is configured to grab a portion of said strip-shaped article.

The winding unit preferably comprises a device for moving said winding heads configured to displace said winding heads along a working path.

Preferably each winding head is configured to wind said strip-shaped article so as to make said coil.

Preferably, each holding device comprises a pair of pins configured to hold said strip-shaped article between them.

Preferably at least one of said pins is movable in such a way as to join the other pin holding said strip-shaped article between them.

Thanks to these features, it is possible to grab and clamp the strip-shaped article, so that the winding can be carried out easily and in a continuous, automated process.

The present invention, in an eighteenth aspect thereof, relates to a method for making a coil, preferably for an electrochemical cell intended for producing batteries, said coil being made by winding at least one strip-shaped article.

Preferably, said method comprises providing a plurality of movable winding heads along a working path.

The method preferably comprises grabbing a portion of said strip-shaped article by said winding head.

It is preferably provided to wind said strip-shaped article by said winding head.

Preferably grabbing said portion of strip-shaped article comprises arranging said portion between a pair of pins, at least one of said pins being movable so as to join the other pin holding said strip-shaped article between them.

Based on this aspect it is possible to reach the same advantages as described in relation to the previous aspect.

The present invention, in a nineteenth aspect thereof, relates also to an apparatus for making a coil, preferably for an electrochemical cell intended for producing batteries.

Said apparatus preferably comprises a feed unit configured to feed at least one strip-shaped article formed by a plurality of strips preferably including conductor strips and separator strips. Preferably, said feed unit comprises a movable portion.

Preferably respective feed paths are defined for each of said strips.

Said feed paths preferably comprise a respective storage segment, said storage segments being preferably substantially parallel to each other.

Preferably, the apparatus comprises a winding unit including at least one winding head configured to wind said strip-shaped article to make said coil.

Preferably, said feed unit is configured in such a way as to vary a respective longitudinal extension of each of said storage segments by moving said movable portion. Said longitudinal extension of said storage segments is varied simultaneously, preferably by a same amount, and preferably by keeping said storage segments substantially parallel to each other.

Thanks to these features, it is possible to use the displacement of the movable portion to simultaneously store the same amount of strip for each of the strips forming the strip-shaped article. It is thereby possible to continuously feed the strips while providing steps in which the strip-shaped article is not wound.

The present invention, in a twentieth aspect thereof, relates also to a method for making a coil, preferably for an electrochemical cell intended for producing batteries. Preferably, said coil is made by winding at least one strip-shaped article.

Said method preferably comprises advancing a plurality of strips along a respective feed path, said plurality of strips preferably including conductor and separator strips.

Preferably, said strips are to be combined in layers, at the end of said feed path, in such a way as to form said strip-shaped article.

The method preferably comprises providing at least one winding head and, preferably, winding said strip-shaped article by said winding head.

Preferably each of said respective feed paths comprises a respective storage segment having a variable length, said storage segments being preferably substantially parallel to each other. Preferably said method comprises simultaneously varying, preferably by a same amount, said length of each of said storage segments, preferably keeping said storage segments substantially parallel to each other during said varying said length.

Based on this aspect it is possible to reach the same advantages as described in relation to the previous aspect.

The present invention, in at least one of the aforesaid aspects, may have at least one of the further preferred features listed hereinafter.

Preferably, each winding head supports a grabbing device which is configured to grab a portion of said strip-shaped article, said grabbing devices being further preferably configured to rotate on themselves around a winding axis in such a way as to wind said strip-shaped article.

Thanks to this feature, the strip-shaped article may be easily grabbed and then wound by the rotation of the same device performing the grabbing. The rotation speed as well as the trajectory and speed of the winding heads while winding the strip-shaped article can thereby be easily controlled.

Preferably, said feed unit defines a feed direction of said strip-shaped article.

Thereby, the feed unit itself defines the direction in which the strip-shaped article is fed, i.e. the direction in which it arrives at the winding heads and is then grabbed and wound.

In case the strip-shaped article is made of several strips, the feed direction coincides with that of the article after the strips have been combined to each other.

Preferably, said movement device is configured to wind said strip-shaped article during a displacement of said winding heads. Preferably, said displacement of the respective winding head while it is winding is in a direction discordant to said feed direction.

Thanks to this feature, it is possible to reduce the length of the strip-shaped article, or keep it as minimum, while the strip is being wound. Situations that may lead to tension states on the strip are thereby reduced and high winding speeds are generally possible.

It should be noted that the term "discordant" and its opposite "concordant" related to two directions, mean that these directions are run in opposite directions, as far as discordant is concerned, or in the same direction, as far as concordant is concerned.

The directions need not be parallel and, in this case, two directions will be considered discordant when the component of one direction parallel to the second one defines a path along which an object moves in the opposite direction relative to the other direction.

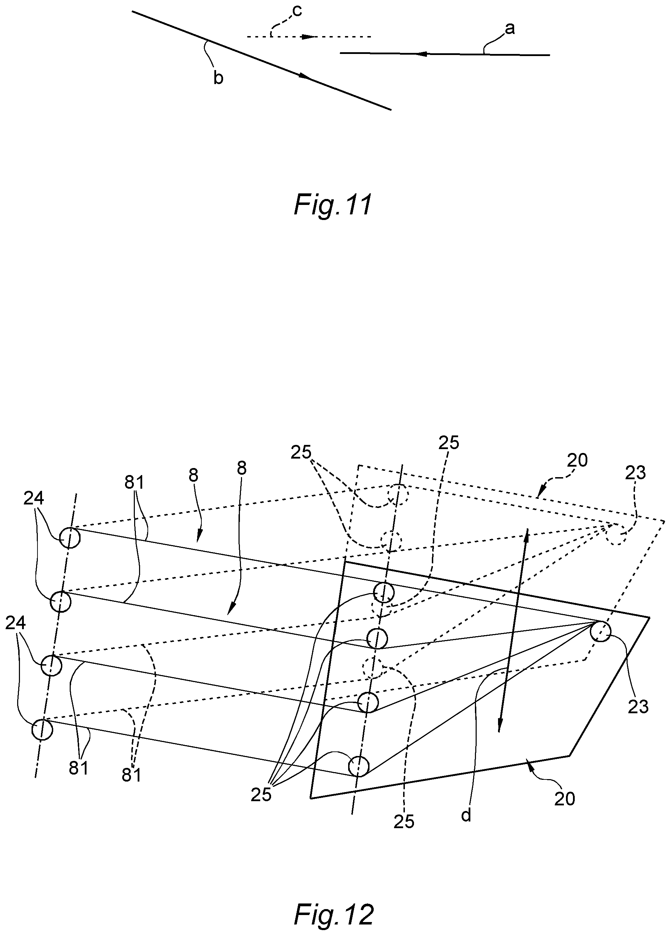

This concept is schematically illustrated in Figure 11, wherein the two directions are illustrated by a continuous line and are respectively indicated by the letters a and b, while the component parallel to the second direction is illustrated by a dashed line and indicated by the letter c. In the example represented in the figure, the two directions are represented as discordant, as it may be seen from the arrows in the two lines.

Preferably, said displacement of the respective winding head along an operative segment is substantially parallel to said feed direction.

The term "substantially parallel", in the context of the present invention, will indicate a possible deviation of ± 10°, preferably ± 5°, from a perfect parallelism.

Thanks to this feature, the winding head can follow the advancement movement of the strip and/or move in a direction opposite to that of the strip advancement in order to wind it in this condition. Each of these features further contributes to making the winding of the strip and thus the formation of the coil faster and more efficient.

Preferably said feed unit comprises an outlet section through which said strip-shaped article exits from said feed unit and is fed to said winding unit, and an inlet section preferably adapted to receive said at least one strip from a respective delivery device, a feed path of said strip being comprised between said inlet section and said outlet section.

Preferably said feed unit comprises a movable portion at which said outlet section is preferably formed.

Thanks to the presence of a movable portion in the feed unit, it is possible to change the position of the section from which the strip-shaped article exits to be provided to the winding heads. This will make it easier for the winding heads to grab the strip-shaped article, and it will also be possible to adjust the distance between the heads and the feed unit and, consequently, the length of the strip between the head on which it is wound and the feed unit.

Preferably, the apparatus comprises a cutting device configured to cut said strip-shaped article at a position downstream of said feed unit.

Thanks to the presence of the cutting device downstream of the feed unit, allows to make not required to stop the strip when it is cut, making it possible to coordinate the cutting action with the movement of the head performed by means of the relative movement device.

Preferably said feed unit and said movement device are configured in such a way that, in order to be prepared for when said cutting device cuts said strip-shaped article, a respective winding head is positioned at a predetermined distance from said feed unit, said predetermined distance being preferably substantially equal to a minimum distance from said feed head.

The term "substantially equal" related to a minimum distance between two components will be understood, in the context of the present invention, to mean that during the different operating steps of the apparatus, the two components may also be at a slightly shorter distance, however, on the whole, and depending on the kinematic mechanisms that set the two components in motion and on their overall dimensions, such a distance may be considered as the minimum achievable. In other words, the winding heads, while moving along the working path, may even be at a shorter distance than that at which they are during the aforesaid cutting step, however in the context of this operation, the distance at which they are located is the minimum at which they may be positioned to allow the approach and use of the cutting devices and depending on the kinematic mechanisms in charge of the movement.

Thanks to this feature, it is possible to minimise the length of the part of the strip-shaped article exiting the feed unit when the cut is made, thus simplifying the management and, in particular, the winding operations, on the two pieces of strip-shaped article generated after cutting.

Preferably said feed unit and said movement device are configured in such a way that when said cutting device cuts said strip-shaped article, said respective winding head is positioned at said minimum distance from said movable portion.

Based on this feature, the movement of the movable portion can be advantageously exploited to achieve positioning the aforementioned winding head at the minimum distance.

Preferably said cutting device is integrally movable to said winding head and/or to said strip-shaped article.

Preferably said movement device is configured to displace, along said working path, said winding heads according to a trajectory that includes at least:
- A rotation around a rotation axis of said movement device, said rotation axis being different from said winding axis; and
- A translation and/or rotation around a further axis, other than said rotation axis and said winding axis.

This feature allows to carry out, by means of suitable kinematic mechanisms, a cyclic movement of the rotation heads, which may be obtained by the rotation around the rotation axis of the movement device, with further movement of the heads obtained by translation and/or further rotation movements.

It will thereby be possible to obtain, with a solution that is of simple construction and, as such, capable of achieving high speeds, the necessary trajectories for the winding heads in order to wind the strip during the movement of the head itself, without this resulting in tension states or movements that are difficult for the strip to control.

Preferably, the movement device is configured in such a way that said winding heads perform a combination of these movements: a translation without varying the distance between said heads and/or any movement that varies the distance between said heads.

Preferably said winding heads and said movable portion are movable in a coordinated manner, said movement device being configured to move said winding heads along said operative segment in such a way as to maintain a respective winding head, on which said strip-shaped article is wound, at a predetermined distance from said movable portion while said winding head is moving. Thanks to such features, it is possible to control the distance between the feed unit and the winding head during the different steps of the coil production, providing for the appropriate distance in order to carry out the winding while minimising tension states and allowing, as required, for the cutting of the strip-shaped article.

Preferably said at least one strip-shaped article is subject to a substantially constant tension, at least along a segment between said feed unit and a respective winding head on which said strip-shaped article is wound.

It will be appreciated that, thanks to the present invention, it is possible to submit the strip-shaped article to a substantially constant tension, particularly when manufacturing the coil, thanks to the fact that winding takes place while the winding head is displaced.

Preferably said feed unit is configured to feed said strip-shaped article at a feed speed, said winding heads being configured to wind said strip at a winding speed and being configured to displace at a displacement speed, said winding speed and said moving speed being preferably such as to submit said strip-shaped article to said substantially constant tension.

It is thereby possible to control the tension by simply controlling the speeds based on which the apparatus is operated, thus allowing to easily control the operating steps thereof.

Preferably, said feed speed is substantially equal to the sum of said winding speed and said displacement speed.

Such condition makes it possible to maintain a substantially constant tension in the strip-shaped article, without the need for it to be stopped during winding or forming, in general, the coil. Preferably, said strip-shaped article comprises a plurality of strips overlapping in layers, at least one of said strips being continuously fed.

Preferably said feed speed is constantly greater than zero, and preferably substantially constant, along said feed path.

Such features each allow the coil to be made without interrupting the strip feed, thus avoiding interruptions in moving the strip that could generate undesired tension states or otherwise reduce the productivity of the apparatus.

Preferably, said feed unit comprises a coupling roller, said strips being arranged in such a way as to converge towards said coupling roller on which said strips are partially wound so that, downstream of said coupling roller, said strips are grouped together to form said strip-shaped article.

Preferably, said outlet section is defined at said coupling roller.

Preferably, said coupling roller is connected to said movable portion.

Thanks to these features, it is possible to group the strips in order to obtain a multilayer strip-shaped article with a solution that allows a continuous advancement of the strips. Furthermore, the position at which the strips are coupled may advantageously be changed during the different operating steps of the apparatus.

Preferably said operative segment comprises at least a first and a second portion, preferably substantially parallel to each other.

Such feature allows to obtain an operative segment with a high extension and to use a movement device that is of relatively simple construction, it being possible to use kinematic mechanisms that are not excessively complex so that two substantially parallel segments are run.

Preferably said movement device is configured to displace each winding head in a first direction along said first portion and in a direction opposite to said first direction in said second portion. The overall dimensions of the movement device or, more generally, of the apparatus may thereby be optimised, as the winding heads may move along two substantially parallel segments in two opposite directions.

Preferably, each grabbing device is configured to wind said strip-shaped article along said first portion at a different speed than said second portion.

Thanks to the use of different winding speeds, it is possible to maintain a substantially constant tension on the strip-shaped article during its winding, particularly if it is continuously fed.

Preferably said winding head is displaced in a direction concordant to said feed direction in said first portion and in a direction discordant to said feed direction in said second portion, said winding head being preferably configured to wind said strip-shaped article at a higher speed when a respective winding head is displaced in a direction discordant to said feed direction.

Thanks to these features it is possible to optimally exploit the movement of the winding head to carry out the winding of the strip-shaped article as quickly as possible, taking into account that during the winding, the winding head moves and, at the same time, the strip-shaped article continues to be fed.

Preferably said operative segment comprises a third portion, preferably substantially parallel to said first and/or second portions, wherein said winding head again moves in a direction concordant with said feed direction along said third portion.

The presence of a third portion makes it possible to further exploit the features of the movement device in the context of a cyclic solution, which preferably provides the displacement of the winding heads along a closed path.

Preferably, said strip-shaped article is wound while said movement head is displaced along said first portion and/or said second portion and/or said third portion.

Preferably, said movement device is configured to wind said strip-shaped article for an amount of between 5% and 15%, preferably 10%, of an overall length of strip-shaped article used for forming a single coil along said first portion, for an amount of between 70% and 90%, preferably 80%, of said total length of strip-shaped article used for forming the single coil along said second portion, and for an amount of between 5% and 15%, preferably 10%, of said total length of strip-shaped article used for forming the single coil along said third portion.

Winding thereby takes place mainly as the winding head moves backwards, i.e. along the second portion, along which winding can take place at a higher speed as the winding head moves in a direction that is discordant to the feed direction.

Preferably, the apparatus comprises a storage device configured to store an amount of at least one of said plurality of strips between said inlet section and said outlet section and an actuating device of the storage device which preferably moves said storage device to vary the amount of stored strip.

Thanks to this feature, it is possible to provide steps during which, while at least one of the strips continues to advance, this is not supplied, and in particular wound, to the winding heads. The cutting steps can thereby be better managed and/or it is possible to provide strips having different lengths in the case of a strip-shaped article consisting of a plurality of overlapping layers. Preferably, said storage device comprises at least one movable element configured in such a way as to vary the overall length of said feed path by moving said movable element.

Preferably said movable element is formed by said movable portion.

Preferably, said movement device is configured to move integrally with said movable portion and, preferably, is rotatably supported on said movable portion.

It is thereby possible to store all the strips forming the strip-shaped article at the same time, e.g. when the movement device, and thus the movable portion, move along the first portion of the operative segment, and to quickly wind the strip thus stored, when it moves back along the second portion of the operative segment.

Preferably said movable element comprises at least one movable roller, said at least one strip being wound on said movable roller and at least one fixed roller in such a way as to vary said overall length. Preferably said movable roller and said fixed roller are configured to rotate as idle. Thanks to this feature, it is possible to stagger the advancement of a single strip, or of several specific strips, in relation to the remaining strips in case the strip-shaped article consists of several overlapping strips, without the need to stop the advancement of the strip. By thereby cutting at predetermined positions the strip that is being stored, it is possible to obtain portions of the strip-shaped article in which one or more of the strips forming the multilayer structure are not present. This is particularly advantageous in the case of a coil for electrochemical cells, in which a coil end part is typically provided wherein only portions of separator strips are present.

Preferably, said feed unit comprises a device for holding at least one of said one or more strips configured to slow down or stop feeding at least one of said one or more strips through said outlet section.

Preferably said storage device is configured to store said strip when said holding device slows down or stops feeding said strip.

The storage devices may thereby operate when the strip is slowed down or stopped, thus preventing this from causing tension on the strip, and allowing the single strip to be continuously advanced without being fed through the outlet section of the feed unit.

Preferably said operative segment includes at least one substantially straight segment.

The presence of a straight segment along which the winding takes place is particularly advantageous in order to avoid undesired tension states on the strip-shaped article.

Preferably, the straight section is substantially parallel to the feed direction, which further contributes to the absence of tension states on the strip-shaped article while manufacturing the coil.

Preferably said first portion and/or said second portion and/or said third portion each form a respective straight segment.

Preferably, said winding heads are configured so as to unload said coil following the winding, at least partially, of said at least one strip, said working path comprising a reset segment along which each of said winding heads is displaced from a unloading position to a holding position in which said winding head grabs said portion of said at least one strip-shaped article. Preferably said working path is closed.

The apparatus can thereby cyclically operate, advantageously providing an operative part in which the winding heads wind and generally make the coil, and a reset part in which the heads can return to a suitable position to restart the cycle.

This is also particularly advantageous in case of a straight path or, in case the winding operations are to be concentrated in a specific area, as it is sufficient to control the rotation of the heads and their behaviour relative to the strip-shaped article in that area, simplifying the required kinematic mechanisms.

Preferably, said operative segment has a length of at least 5%, preferably at least 10%, preferably at least 15%, preferably at least 20% of an overall working segment length.

Preferably, in such an operative segment, the winding of the strip-shaped article takes place while the respective winding head, on which the strip-shaped article is wound, is displaced.

In other words, such displacement will cover a substantial part of the overall working path of the winding head. It will therefore be appreciated that the movement of the winding head is not limited to compensating for any differences in diameters occurring during the winding, or minor displacements of the strip-shaped article relative to the feed direction thereof during the winding. It is thereby possible for the head to follow the advancement of the strip-shaped article during movement thereof and formation of the coil. Furthermore, this makes it possible to suitably exploit the operative segment, along which the winding head moves and winds the strip-shaped article, to appropriately coordinate the operation of two or more winding heads, e.g. by providing that one head starts winding one coil, while another head finishes winding another coil.

Preferably, said cutting device is configured to cut said strip-shaped article along said operative segment of said working path and, preferably, in an intermediate area of said working path.

Thanks to this feature, it is possible to exploit the movement of the winding head in various steps, both for winding and for cutting as well as for transporting the coil, thus cut, to an unloading area. Preferably said plurality of winding heads comprises at least a first winding head and a second winding head, said movement device being configured so as to vary the distance between said first winding head and said second winding head along said working path.

The possibility of varying the distance between the two winding heads makes it possible to efficiently manage the steps of manufacturing the coil, in particular by varying the distance between the two heads between the steps in which winding takes place and those in which the strip-shaped article is cut.

Preferably said movement device is configured so as to move said first winding head closer to said second winding head along said working path when said cutting device cuts said strip-shaped article.

This makes it possible to cut between the two winding heads while minimising the size of the two strips of strip-shaped article that are generated as a result of the cut, one head being as close as possible to the other.

Preferably said movement device is configured so as to move said first winding head away from said feed unit, and being further configured so as to move said second winding head to an intermediate position between said first winding head and said feed unit along said operative segment when said first winding head is moved away.

Thanks to this feature, it is possible to arrange the second winding head in order to grab the strip-shaped article while the other winding head is still winding, or otherwise grabbing, the strip-shaped article itself. Thereby, when the second movement head grabs the strip-shaped article, the latter is still being wound on the first winding head.

Preferably said movement device is configured so that when said first winding head runs along said third portion, said second winding head, which precedes said first winding head along said working path, runs along said first portion.

This feature also makes it possible to optimise the overall dimensions of the apparatus and to perform, at least partially, the winding of two coils at the same time, since, after cutting the strip-shaped article, the first winding head finishes winding the remaining flap along the third portion and the second winding head starts winding along the first portion.

Preferably, each grabbing device comprises a pair of pins configured to hold said strip-shaped article between them, at least one of said pins being movable so as to join to the other pin holding said strip-shaped article between them.

The presence of the pins makes it possible to grab and clamp the strip-shaped article, so that winding can be carried out easily and in a continuous, automated process.

Preferably said winding axis is aligned to a direction of longitudinal extension of said pins. Preferably said at least one pin is movable along a transverse, preferably perpendicular, extraction direction relative to the feed direction of said strip-shaped article.

It is thereby possible to arrange the strip-shaped article in a sandwich configuration between the two pins as the winding head moves closer to the article itself, since only one pin is moved closer to the strip during the movement of the head, the other pin being on the other hand brought to the first pin only when this has reached the strip. The pins, once in this position, may start to rotate around themselves, starting winding and grabbing the strip.

Preferably, said pins are both movable, said pins being configured in such a way as to be both movable independently of each other and in conjunction with each other, said pins being both configured in such a way as to move along said extraction direction.

Thereby, the same pins may advantageously be used both to grab the strip-shaped article and start winding it, and to unload the coil once it has been made.

Preferably said displacement direction of said movable portion forms an angle relative to the horizontal direction of between 30° and 60°, preferably between 40° and 50°, said angle being preferably substantially equal to 45°. It is thereby possible to obtain an optimum compromise between the overall dimensions associated with the stroke of the movable portion and the power required for the vertical movement of the movable portion and of all the components it supports. Preferably, each of said strips defines a respective feed path, said feed paths comprising a respective storage segment, said storage segments being preferably substantially parallel to each other.

Preferably, two or more of the group consisting of: at least one of said storage segments, the feed direction of the strip-shaped article, the displacement direction of the movable portion and at least one of the portions of the operative segment, are substantially parallel to each other.

Preferably, said storage segments, said feed direction of the strip-shaped article, said displacement direction of the movable portion and at least one of the portions of the operative segment, are all substantially parallel to each other.

Preferably, said feed unit is configured in such a way as to vary, preferably in a coordinated manner with said movement of said movable portion along said displacement direction, a respective longitudinal extension of each of said storage segments.

It is thereby possible to maintain a constant tension even during the storage of the strips forming the strip-shaped article, without the movement of the movable portion generating undesired tension on the strips.

Preferably, said storage segment(s) extends/extend between a respective pair of diverter rollers, preferably idle. Preferably a diverter roller of said pair of rollers is supported on said movable portion.

This feature allows the strips to slide while being stored and, in particular, during the movement of the movable portion, so as not to generate undesired tension, as previously illustrated. Preferably said longitudinal extension of said storage segments is varied simultaneously, preferably by a same amount, and keeping said storage segments substantially parallel to each other.

It should be noted that the term "storage segment" related to the strips forming the strip-shaped article will be referred to, in the context of the present invention, as a portion of a variable length of the path, along which the strips move, in which the sliding of the strip is associated with the relative advancement. The storage segments can thereby form a buffer of one or more of the strips forming the strip-shaped article.

Thanks to this feature, it is possible to use the displacement of the movable portion to simultaneously store the same amount of strip for each of the strips forming the strip-shaped article. It is thereby possible to continuously feed the strips while providing steps in which the strip-shaped article is not wound.

Preferably, combining said strips in layers comprises converging said strips, downstream of said storage segments, to an outlet section through which said strip-shaped article is supplied to said winding head.

A space can thereby be defined between one strip and the other, before the outlet section, to place the grippers and knives which may be used to cut one or more of the strips before they are combined to form the strip-shaped article.

Preferably, said strip-shaped article is grabbed by means of a grabbing device, said strip-shaped article being wound by the rotation of said grabbing device around a winding axis.

Also this feature makes it possible to grab the strip-shaped article and then wind it by rotating the same device grabbing it. The rotation speed and the trajectory and the speed of the winding heads as they wind the strip-shaped article can thereby be easily controlled.

Preferably, it may be provided that grabbing said portion of said strip-shaped article comprises feeding said strip-shaped article, said strip-shaped article being fed by displacement in a feed direction.

Thereby, the feed unit itself defines the direction in which the strip-shaped article is fed, i.e. the direction in which it arrives at the winding heads and is then grabbed and wound.

Preferably, such a strip-shaped article is wound during a displacement of said winding heads. Preferably, said winding head is displaced in a discordant direction with respect to said feed direction when it winds said strip-shaped article.

Also thanks to this feature it is possible to reduce the length of the strip-shaped article, or at least keep it as minimum, while the strip is being wound. Situations that may lead to tension states on the strip are thereby reduced and high winding speeds are generally possible.

In preferred embodiments, it may be provided to feed said strip-shaped article to said winding head, said strip-shaped article being preferably fed through an outlet section of said strip-shaped article.

Preferably said outlet section is movable along a displacement direction, said displacement direction being preferably substantially parallel to said feed direction.

Preferably said outlet section is movable back and forth along said movement direction.

By moving the outlet section, it is possible to change the position from which the strip-shaped article exits to be provided to the winding heads. The winding heads will be able to more easily grab the strip-shaped article, and it will also be possible to adjust the length of the strip between the head on which it is wound and the feed unit.

In preferred embodiments, it may be provided to cut said strip-shaped article at a position downstream of said feed unit.

By cutting the strip-shaped article downstream of the feed unit, it is not required to stop the strip when it is cut, making it possible to coordinate the cutting action with the movement of the head by means of the relevant movement device.

Preferably, said winding head is positioned at a minimum distance from said outlet section in preparation for said step of cutting said strip-shaped article.

Also thanks to this feature, it is possible to minimise the length of the part of the strip-shaped article exiting the feed unit when the cut is made, thus simplifying the management and, in particular, the winding operations, on the two pieces of strip-shaped article generated after cutting. Preferably, the method comprises providing a cutting device to cut said strip-shaped article and displacing said cutting device integrally with said movable portion and/or said winding head and/or said strip-shaped article, while said strip-shaped article is being cut.

It is thereby possible to carry out the cut while the winding heads move, without the need to stop the strip and, consequently, allowing a continuous coil manufacturing process.

In preferred embodiments, it may be provided to move these winding heads according to a trajectory formed at least by:
a rotation around a rotation axis of said movement device, said rotation axis being different from said winding axis; and
a translation and/or rotation around a further axis, other than said rotation axis and said winding axis.

Thanks to these steps, it will thereby be possible to obtain, with a solution that is of simple construction and, as such, capable of achieving high speeds, the necessary trajectories for the winding heads in order to wind the strip during the movement of the head itself, without this resulting in tension states or movements that are difficult for the strip to control.

In preferred embodiments, it may be provided to simultaneously move said outlet section and said winding head to which said strip-shaped article is fed, keeping them at a predetermined distance. Also thanks to such features, it is possible to control the distance between the feed unit and the winding head during the different steps of manufacturing the coil, providing for the appropriate distance in order to carry out the winding while minimising tension states and allowing, as required, for the cutting of the strip-shaped article.

Preferably, it may be provided to simultaneously move said outlet section and said winding head, while said winding head winds said strip-shaped article. Said strip-shaped article is grabbed and moved by said winding head in such a way that said strip-shaped article is subjected to a substantially constant tension upstream of said winding head.

It is thereby possible to submit the strip-shaped article to a substantially constant tension, particularly when manufacturing the coil, due to the fact that winding takes place while the winding head is being displaced.

Preferably said strip-shaped article is fed through said outlet section at a feed speed substantially equal to the sum of a winding speed of said strip-shaped article and a displacement speed at which said winding head, on which said strip-shaped article is wound, is displaced.

It is thereby possible to control the tension by simply controlling the speeds based on which the apparatus is operated, thus allowing to easily control the different operating steps thereof.

In preferred embodiments, it may be provided to combine a plurality of layers so as to form said strip-shaped article, at least one of said strips being continuously fed.

Preferably said feed speed is constantly greater than zero, and even more preferably substantially constant.

Also such features allow the coil to be made without interrupting the strip feed, thus avoiding interruptions in moving the strip which could generate unwanted tension states or otherwise reduce the productivity of the apparatus.

Preferably, it is provided to couple these strips to form said strip-shaped article by partially winding them on a coupling roller.

Preferably, said outlet section is defined at said coupling roller.

Also thanks to these features, it is possible to group the strips in order to obtain a multilayer strip-shaped article with a solution that allows a continuous advancement of the strips. Furthermore, the position at which the strips are coupled may advantageously be changed during the different operating steps of the apparatus.

In preferred embodiments, it may be provided to move said winding heads along a first and second portion of said operative segment substantially parallel to each other, each winding head being displaced in a first direction along said first portion and in a direction opposite said direction, in said second portion.

In this way, it is possible obtain an operative segment with a high extension and to use a movement device that is of relatively simple construction, it being possible to use kinematic mechanisms that are not excessively complex so that two substantially parallel segments are run.

In addition, the operating steps of the winding heads or more generally of the method according to the present invention may be optimised in that the winding heads may move along two parallel or even substantially coincident lines, but in two opposite directions.

Preferably, each grabbing device is configured to wind said strip-shaped article along said first portion at a different speed than said second portion.

Preferably said winding head moves in a direction concordant to said feed direction in said first portion and in a direction discordant to said feed direction in said second portion.

Said strip-shaped article is preferably wound at a higher speed when a respective winding head moves along said second portion.

Thanks to the use of different winding speeds, it is possible to maintain a substantially constant tension on the strip-shaped article during its winding, particularly if it is continuously fed.

In preferred embodiments, it may be provided to move said winding heads along a third portion of said operative segment, preferably substantially parallel to said first and second portions, said winding head being preferably displaced in a direction concordant with said feed direction along said third portion.

Thanks to these features, it is possible to optimally exploit the movement of the winding heads to carry out the winding of the strip-shaped article as quickly as possible, taking into account that during the winding, the winding head moves and, at the same time, the strip-shaped article continues to be fed.

Preferably at least one of said strips advances at a substantially constant speed along a segment between an inlet section through which said strips are individually provided and said outlet section. In preferred embodiments it may be provided to store an amount of said at least one strip before it is grabbed by said winding head, and preferably said stored amount being variable during the displacement of said winding heads.

Preferably said strips comprise conductor strips and separator strips, said method comprising storing at least one of said conductor strips during an advancement between said inlet section and said outlet section.

Also thanks to this feature, it is possible to provide steps during which, while at least one of the strips continues to advance, this is not supplied, and in particular wound, to the winding heads. The cutting steps may thereby be better managed and/or it is possible to provide strips having different lengths in the case of a strip-shaped article consisting of a plurality of overlapping layers. Preferably, it may be provided to slow down or stop feeding one or more of said strips, said variable amount of one or more of said strips being stored when said feeding is slowed down or stopped.

The storage of the strip may thereby take place when the strip is slowed down or stopped, thus preventing tension from being generated on the strip, and allowing the individual strip to be continuously advanced without being fed through the outlet section of the feed unit.

Preferably said outlet section is displaced, preferably along said displacement direction, when said strip-shaped article is stored.

Preferably, said winding heads move simultaneously, keeping a substantially constant distance from each other.

Preferably, the winding heads move integrally with said outlet section.

It is thereby possible to store all the strips forming the strip-shaped article at the same time, e.g. when the movement device, and thus the movable portion, move along the first portion of the operative segment, and to quickly wind the strip thus stored, when it moves back along the second portion of the operative segment.

Preferably storing said at least one strip comprises varying a distance run by said at least one strip between said inlet section and said outlet section.

Also thanks to this feature, it is possible to stagger the advancement of a single strip, or of several specific strips, in relation to the remaining strips in case the strip-shaped article consists of several overlapping strips, without the need to stop the advancement of the strip.

Preferably said operative segment includes a substantially straight section.

The presence of a straight section along which the winding takes place is particularly advantageous in order to avoid undesired tension states on the strip-shaped article.

In preferred embodiments, it may be provided to unload said coil after winding, at least partially, said strip-shaped article, said winding heads being returned, after discharging said coil, to a grabbing position along said working path at which they grab said portion of strip-shaped article. These features also contribute to making it possible for the method of the present invention to take place cyclically, advantageously providing for an operating part in which the winding heads carry out the winding and, in general, make the coil, and a reset part in which the heads may return to a suitable position to restart the cycle.

Preferably said plurality of winding heads comprises at least a first winding head and a second winding head, said method comprising varying the distance between said first winding head and said second winding head along said working path.

Varying the distance between the two winding heads makes it possible to efficiently manage the steps of manufacturing the coil, in particular by varying the distance between the two heads between the steps in which winding takes place and those in which the strip-shaped article is cut. It may be preferably provided to move said first winding head closer to said second winding head along said working path in preparation for said step of cutting said strip-shaped article.

The strip-shaped article is thereby cut between the two winding heads, minimising the size of the two flaps of strip-shaped article generated as a result of the cut, one head being as close as possible to the other.

Preferably, it may be provided to move said first winding head away from said outlet section and place said second winding head in an intermediate position between said first winding head and said outlet section, while said first winding head grabs said portion of said strip-shaped article. Also thanks to this feature, it is possible to arrange the second winding head in order to grab the strip-shaped article while the other winding head is still winding, or otherwise grabbing, the strip-shaped article itself. Thereby, when the second movement head grabs the strip-shaped article, the latter is still being wound on the first winding head.

Preferably when said first winding head runs along said third portion, said second winding head, which precedes said first winding head, runs along said first portion.

This feature also makes it possible to optimise the overall dimensions of the apparatus. In addition, it may be preferably provided to at least partially wind two coils at the same time, as, after cutting the strip-shaped article, the first winding head finishes winding the remaining flap along the third portion and the second winding head starts winding along the first portion.

Preferably grabbing said portion of strip-shaped article comprises arranging said portion of strip-shaped article between a pair of pins, at least one of said pins being movable so as to join the other pin holding said strip-shaped article between them.

It is thereby possible to grab and clamp the strip-shaped article, so that the winding can be carried out easily and in a continuous, automated process.

Preferably, said pin is movable along a transverse, preferably perpendicular, extraction direction, relative to said feed direction of said strip-shaped article.

Thanks to this feature, only one pin is moved closer to the strip during the head movement, the other pin being brought to the first pin only once it has reached the strip.

Preferably said pins are both movable, said method comprising moving said pins independently of each other to grab said portion of strip-shaped article and moving said pins together with each other to unload said coil from said winding head, once said coil has been made by winding said strip-shaped article.

Thereby, the same pins may advantageously be used both to grab the strip-shaped article and start winding it, and to unload the coil once it has been made.

It should be noted that some steps of the methods described above may be independent of the order of execution reported. In addition, some steps may be optional. Furthermore, some steps of the method may be performed repetitively, or they may be performed in series or in parallel with other steps of the method.

The features and advantages of the invention will become clearer from the detailed description of a preferred embodiment thereof, shown, by way of an indicative and non-limiting example, with reference to the appended drawings, wherein:
- Figure 1 is a schematic front view of the apparatus according to the present invention;
- Figure 2 is a perspective view of an apparatus made according to the present invention;
- Figures 3 to 8 are schematic front views illustrating the apparatus according to the present invention during different operating steps;
- Figure 9 is a further perspective view of the apparatus according to the present invention, with some components removed for the sake of clarity;
- Figure 10 is a schematic perspective view of an alternative embodiment of the apparatus according to the present invention;
- Figure 11 is a schematic illustration showing two discordant directions according to the meaning of the present invention; and
- Figure 12 illustrates an alternative embodiment of a movable portion of a feed unit of the apparatus according to the present invention, while being moved to store an amount of strip.

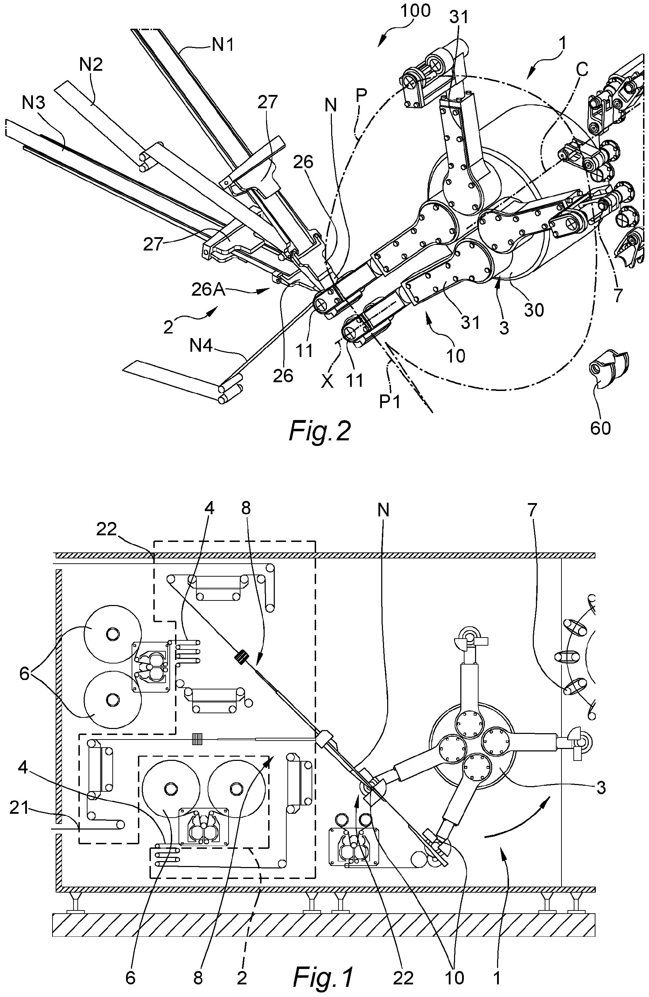

Referring initially to Figures 1 and 2, an apparatus for making a coil B, made according to the present invention, is globally referred to by 100.

In preferred embodiments, the apparatus 100 is intended to carry out the winding of a strip-shaped article N intended for producing electrochemical cells.

It is understood, however, that this represents a possible embodiment and that the apparatus 100 according to the present invention may be intended for winding strip-shaped articles also for different uses, even in fields other than those related to the production of electrochemical cells. For example, still in the field of energy storage, the present invention may be applied for manufacturing other rolled components intended for batteries or supercapacitors.

In certain embodiments, such as the one illustrated in Figure 1, the apparatus 100 may be used as part of a coil production line for electrochemical cells, in which the strip-shaped article N is made by a combination of several strips N1, N2, N3, N4, preferably overlapping in layers.

Such strips advantageously comprise at least two conductor strips N1, N3 and two separator layers N2, N4, which are arranged alternately to form the strip-shaped article N.

The separator strips N2, N4 can thereby keep the two conductor strips N1 and N3 electrically separated from each other as they are wound in a spiral, forming the coil intended for the electrochemical cell.

In preferred embodiments, the strips N1, N2, N3, N4 are provided by suitable delivery devices 6. For exemplary purposes, Figure 1 illustrates an embodiment of delivery devices 6 of the separator strips, which may be formed by large coils wherein the strip is collected in such a way that it is unwound and then delivered during the operation of the apparatus.

The strips provided by the delivery devices 6 are then provided to a feed unit 2 which, in preferred embodiments, is in charge of combining the strips with each other to form the strip-shaped article N before it is wound by a relative winding unit 1, the characteristics of which will be described in detail hereinafter.

Preferably, the feed unit 2 comprises an inlet section 21 preferably adapted to receive the strips from the respective delivery devices 6 and an outlet section 22 through which said strip-shaped article N exits out of the feed unit 2 and is fed to the winding unit 1.

Between the inlet section 21 and the outlet section 22 a feed path 8 of the strips is thus defined.

It will be appreciated that the strips, before being provided to the feed unit 2, may pass through further units, e.g. intended for carrying out preliminary processing on the strips. For instance, the conductor strips may be subjected to preliminary etching operations so as to shape a relative outer edge to facilitate connections with the further conductive portions within the electrochemical cell. As previously mentioned, the strips N1, N2, N3, N4 may be combined within the feed unit so as to form the strip-shaped article N to be wound for making the coil.

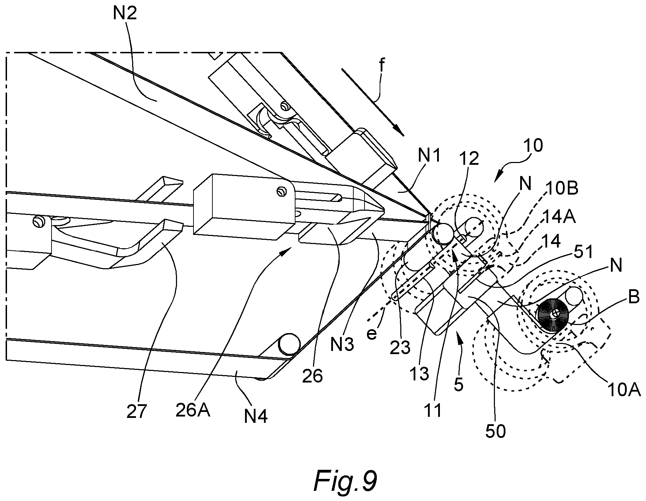

For this purpose, it may be provided that the strips N1, N2, N3, N4 are advanced along different directions to converge towards a coupling roller 23, visible in Figure 9, on which all of them are all partially wound in such a way that, downstream of said strip, a single multilayer structure forming the strip-like article N, is obtained.

In preferred embodiments, the strips N1, N2, N3, N4 are continuously fed inside the feed unit 2. In other words, each strip, or in case one or more of the aforesaid strips, is fed into the feed unit 2 without ever stopping, proceeding at a speed greater than zero and, preferably substantially constant.

However, there may be a need to provide for interruptions of one or more of the strips forming the strip-shaped article N, or to slow down the advancement of one or more of the strips for other operating requirements related to the specific processing being performed.

For example, in the production of coils intended for electrochemical cells, it may be provided that the strips forming the anode and cathode, respectively, are not present in the end portion of the strip-shaped article wound to form the coil. In other words, it may be provided that the coil has an end flap in which only the two separator strips are present overlapped.

For this and other purposes, a storage device 4 configured to store an amount of at least one of said plurality of strips N1, N2, N3, N4 between the inlet section 21 and the outlet section 22 of the device may be provided.

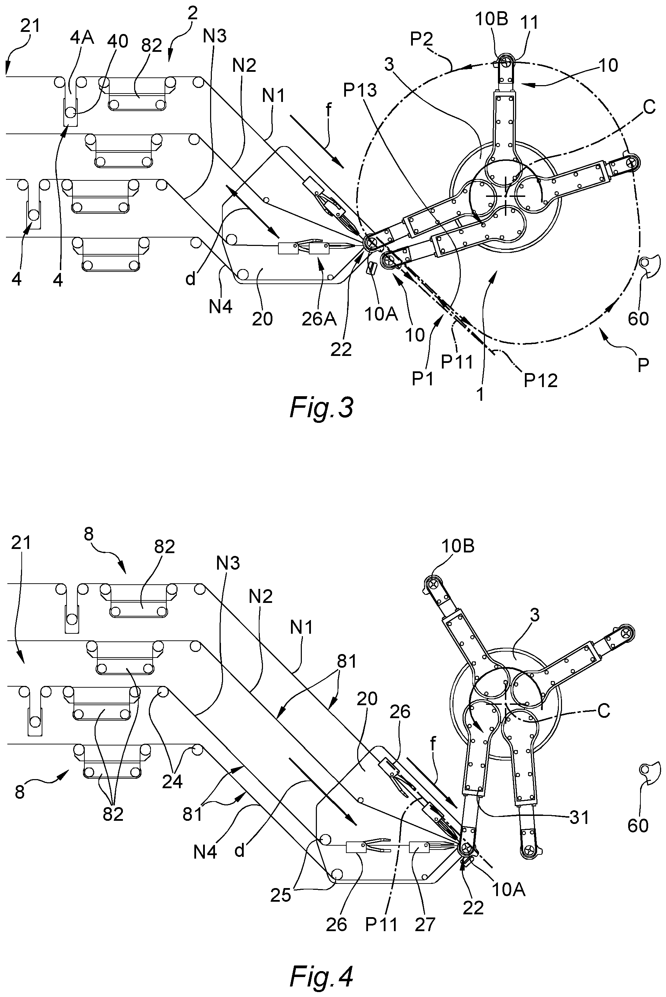

As illustrated in the embodiment in Figure 3, in preferred embodiments, the storage device 4 comprises at least one movable element 4A configured in such a way as to vary the overall length of said feed path by moving said movable element 4A.

The amount of stored strip may be variable, in that the amount of strip, in terms of length, that is stored can be expected to vary during the different steps of the process, in order to meet specific needs as mentioned above.

For this purpose, an actuating device of the storage device 4 may be provided which actuates, preferably by displacing it, the storage device 4 to vary the stored amount of strip.

As illustrated in the example of Figure 3, the movable element 4A may comprise at least one movable roller 40, on which the strip, whose amount is to be stored, is wound.

The strip is then wound onto the movable roller 40 and on at least one fixed roller. By thereby varying the distance between the two rollers, the length of the path that the strip must cover between the inlet section 21 and the outlet section 22 may be varied, allowing as such the desired amount to be stored.

Thereby, considering the example in Figure 3, by lowering the movable roller 40 the length of the strip N1 may be increased and, considering a constant or substantially constant advancement speed entering the feed unit 2, the part of the strip at the outlet section may be slowed down or stopped in relation to the other strips.

It should also be noted that in preferred embodiments, the action of the movable roller 40, or more generally of the storage device 4, may be associated with a strip holding device 26A configured so as to slow down or stop feeding one or more strips.

In other words, the action of the storage device 4 may be coordinated with that of the holding device 26A in such a way that the storage device 2 stores the strip N when the holding device 26A slows down or stops feeding the strip.

For example, in some embodiments, in order to slow down the movement of this part of the strip, the presence of a gripper 26, illustrated for example in Figure 2, or of other similar holding element, which acts on the strip when it is required to be stopped or slowed down, may be provided. The gripper 26 may be advantageously movable, so that the advancement speed of the relative strip may be adjusted by controlling its movement.

The gripper 26 may also be combined with a corresponding knife 27, which, if necessary, cuts one of the strips to create an interruption in the continuity of such strip within the overall strip-shaped article N.

Referring now to Figures 1 and 2, the winding unit 1 is arranged immediately downstream of the feed unit 2 in such a way as to receive the strip-shaped article N formed by it.

Preferably, the strip-shaped article N is fed by being displaced along a feed direction f, which in preferred embodiments, corresponds to the direction along which the strip-shaped article N moves once it is formed by combining the individual strips N1, N2, N3, N4 and possibly the direction it takes between the roller 23 and the winding unit 1.

In general, however, it will be possible to define an overall direction of advancement of the strip-shaped article N depending on the characteristics of the feed unit 2 and on how the strips are combined therein.

Still referring to Figures 2 and 3, in preferred embodiments, the winding unit 1 comprises a plurality of winding heads 10, each of which allows winding the strip-shaped article N according to the methods described in greater detail hereinafter.

The winding heads 10 are movable within a working path P, which is preferably closed, as schematised in Figure 3.

The movement of the winding heads 10 is performed by means of a respective movement device 3 through which it is possible to make each head perform the working path P.

In some embodiments, such as the one illustrated in Figure 2, the movement device 3 comprises a rotatable body 30 which may rotate around a rotation axis C thereof.

The rotatable body 30 supports a plurality of extendable arms 31, which are preferably hinged at one end thereof to the rotatable body 30 and, at an opposite end thereof, a respective winding head 10 is in turn supported.

Advantageously, the combination of the rotatable body 30 and the extendable arms 31 allows the winding heads to make the necessary movements to follow the working path P.

In preferred embodiments, this results in the winding heads 10 moving according to a trajectory that includes at least a rotation around the rotation axis C of the movement device 3 and a translation and/or rotation around a further axis, other than said rotation axis C.

It can therefore be noted that, in the embodiments illustrated in the figures, the rotation around the further axis is made by swinging the arms 31 around the axis passing through the end connected to the rotatable body 30.

However, it is clear that different combinations of such movements may also be provided, which will be able to be performed either simultaneously or one after the other.

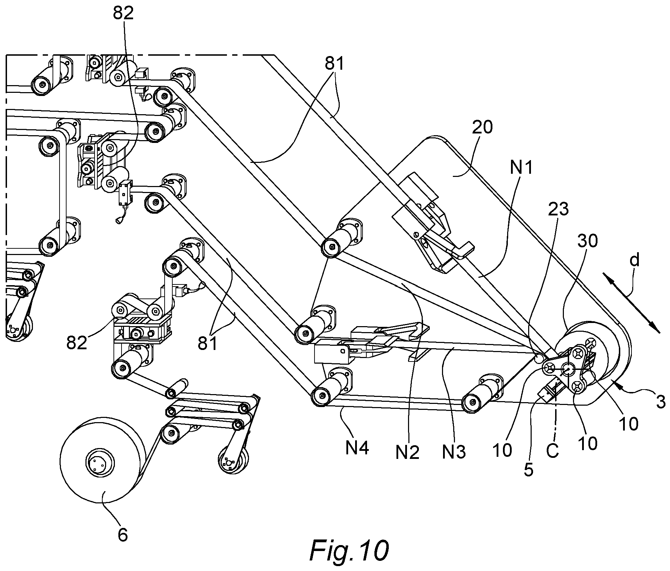

Figure 10 illustrates a variant embodiment of the present invention wherein the winding heads 10 are directly attached to the rotatable body 30, hence without the use of extendable arms. The rotatable body 30 is also advantageously movable not only around its rotation axis C, but also in a direction of displacement d along which said rotatable body 30 and, in general, the movement device 3, may be displaced.

Referring now again to Figure 2, in some embodiments each winding head 10 supports a grabbing device 11 which is configured to grab a portion of said strip-shaped article N.

The winding of the strip-shaped article N can thus be obtained by rotation of the grabbing devices 11 themselves around a winding axis X thereof. By grabbing one end of the strip-shaped article N or, more generally, a portion thereof, and rotating said end or portion, it is in fact possible to wind the strip-shaped article N obtaining a spiral configuration forming the coil.

Referring now also to Figure 9, each grabbing device 11 preferably comprises a pair of pins 12, 13 between which the strip-shaped article N is held.

At least one of the two pins is movable in such a way as to join to the other pin holding said strip-shaped article N between them.

The pins 12, 13 are arranged substantially parallel to the winding axis X of the strip-shaped article and may also be rotated to perform the winding of the turns.

In order to allow the pins grab the strip-shaped article N, it may be provided that at least one of the two pins is movable along an extraction direction e. A first pin 12 of the pair can thereby move closer the strip-shaped article N during the movement of the relative head 10 along the path P. On the other hand, the second pin 13, which is movable, is intended to be arranged in a downstream position along the path P in relation to the fixed pin 12. The strip-shaped article may thereby be comprised between the two pins 12, 13.

For this purpose, the movement of the extraction direction and of the movable pin 13 is substantially parallel, or more generally not perpendicular, to the axis X and perpendicular, or more generally transverse, to the feed direction f of said strip-shaped article N.

The second pin 13 may thereby be placed in a position that does not interfere with the first pin 12 moving closer to the strip-shaped article N, and it is possible to displace the second pin 13 to a position such as to hold the article N once the first pin 12 is in place.

Advantageously, the first pin 12 may also be configured to move along the extraction direction and, simultaneously with the second pin 13, in order to allow the coil to be unloaded, as will be explained in greater detail hereinafter.

Figures 3 to 8 illustrate the movement of the winding heads 10 and, in general, the operation of the present invention in a preferred embodiment.

Hereinafter, these figures will be described in relation to two winding heads 10, it being evident that the same concepts will be applicable to an indefinite number of heads.

In Figure 3 a first winding head 10A and a second winding head 10B are therefore identified, the latter being arranged upstream along the working path P in relation to the first head 10A.

In the condition of Figure 3, the first winding head 10A is located adjacent to the outlet section 22 of the feed unit, in the position where it receives the strip-shaped article N from it.

The second winding head 10B, on the other hand, is arranged along a reset section P2 of the working path P. Such a reset section P2 allows the working path P to be closed, and is in particular the segment along which the winding heads return to the beginning of the operative segment P1 after winding the strip-shaped article, forming the coil and unloading the latter in an unloading area 7, the latter being schematically indicated in Figures 1 and 2. It will be appreciated that the coil B in such unloading area 7 is unloaded from the winding unit 1 to be transported to other units intended for producing the cell.

Preferably, unloading occurs by moving the two pins 12, 13, which are displaced along the extraction direction in such a way as to release the coil B from the relative winding head.

After the strip-shaped article N has been grabbed by the winding head 10A, it continues its movement along the working path at a first portion P11 of the operative segment P1.

Preferably this first portion P11 is straight and is run in a way concordant to the feed direction f of the strip-shaped article N.

In some embodiments, the feed unit 2 comprises a movable portion 20, which may move along a displacement direction d and at which the outlet section 22 is formed and on which the coupling roller 23 is preferably fixed.

In some embodiments, the direction of displacement d forms an angle relative to the horizontal direction of between 30° and 60° and is preferably of 45°.

Referring now to Figure 4, preferably the feed paths 8 of the strips N1, N2, N3, N4 comprise a respective storage segment 81 of a variable length extending between respective pairs of diverter rollers 24, 25, preferably idle.

Preferably, the storage segments 81 extend substantially parallel to each other and the direction of the strips N1, N2, N3, N4, is diverted by the diverter roller 25 in such a way that each of the strips flows into the coupling roller 23. In some embodiments, such as that illustrated in the Figures 1 to 10 and, in particular, in Figure 4, the strip N1 is substantially parallel to the direction of displacement d of the movable portion 20 and is aligned with the storage roller 23 and, consequently, the presence of the storage roller 25 is not required.

Advantageously, the distance between parallel segments 81 is such that it is possible to accommodate the grippers 26 and knives 27 illustrated above between two adjoining strips in the section between the diverter roller 25 and the coupling roller 23.

In some embodiments, one of the rollers of each pair of diverter rollers 24, 25 is supported on the movable portion 20, in such a way that it moves integrally with it, as will be illustrated in greater detail hereinafter.

In this way, the length of the storage segments 81 of each strip may be simultaneously varied by moving the movable portion 20.

During the advancement of the movable portion 20 the feed unit 2 can therefore store an amount of strip-shaped article N between the inlet section 21 and the outlet section 22.

In fact, as it may be seen by comparing Figures 3 and 4, the length of the storage segments 81 and, more generally, of the path that the strips N1, N2, N3, N4 run between the inlet section 21 and the outlet section 22, is increased by coordinating the advancement of the strips with the displacement of the movable portion 20, storing as such an amount of the respective strips between these sections.

Preferably the displacement of the movable portion 20 is associated with the advancement of the strips in such a way that no tensions are generated thereon. In fact, the strips may slide on the diverter rollers 25 while the movable portion 20 moves, thus increasing the length of the strip between the roller 24 and the roller 25, without producing any tension state. Preferably, the displacement speed of the movable portion 20, if it is concordant with the advancement movement of the strips, will be lower than their feed speed.

It is thereby possible to avoid pulling the strip during the movement of the movable portion 20, thus making this movement neutral with respect to the movement of the strips.

In preferred embodiments, the storage segments 81 extend substantially parallel to each other, remaining substantially parallel even during and after the displacement of the movable portion 20 and, consequently, of their length variation.

This may be obtained by providing the movable portion 20 to move along a displacement direction d substantially parallel to the storage segments 81. Thereby, as the movable portion moves along the direction d, the storage segments 81 increase or reduce their length by a same amount.

More generally, the displacement direction d may preferably be substantially parallel to the feed direction f.

Alternatively, the same result may be achieved by suitably arranging the rollers 24, 25 between which the storage segments 81 extend.

In particular, in alternative embodiments, such as the one illustrated in Figure 12, it may be provided that, unlike the embodiments shown in the other figures, both the rollers 24 and the rollers 25 are aligned with each other and aligned with the direction of displacement d of the movable portion 20.

It may therefore be observed that the movement of the movable portion 20 is, in this case as well, associated with a change in the length of each of the storage segments 81.

In certain embodiments, the feed unit 2 comprises, along the feed path 8 one or more alignment devices 82 configured so as to guide the strips N in order to avoid, or at least limit, transverse deviations thereof as they advance. For example, the alignment devices 82 may include pivoting carriages which, in case the strip deviates transversally from its advancement direction, perform stresses on the strip so that it returns to a straight condition.

Referring now again to Figure 4, in some embodiments the movement of the winding head along the portion P11 may be accompanied by a corresponding movement of the movable portion 20 along the displacement direction d.

Note also that the winding heads 10 and the movable portion 20 may be moved in a coordinated way. In other words, the movement of the winding heads 10 and the movable portion 20 occurs synchronously.

The distance between the winding head 10, which is winding or more generally holding the strip, and the movable portion 20 of the winding unit 2 may thereby be controlled. Consequently, it will be advantageously possible to provide that the length of strip-shaped article N between the winding unit 2 and the winding head that is holding it is minimum or at least equal to a predetermined distance.

It may for instance be seen from Figure 4, that even in this operating position the first head 10A is placed adjacent to the outlet section 22 of the feed unit 2.

For this purpose, in preferred embodiments, the displacement direction d may be substantially parallel to the first portion P11 of the operative segment P1.

It will be understood that, as previously mentioned, in the context of the present invention, the term "substantially" related to the parallelism with respect to the operative segment P1 along which the winding takes place, means that the two directions are parallel except for the deviations related to the winding of the strip-shaped article N. In fact, during the winding of the strip-shaped article N the position of the tangency point thereof on the coil being formed is variable and, unless it is compensated for by a movement of the extendable arms 31, it does not follow a perfectly straight line. This may therefore result in a deviation from a perfect parallelism.

Therefore, as explained above, the term "substantially parallel" will still refer to a possible deviation of ± 10° and preferably ± 5° from a perfect parallelism.

Along the portion P11, the winding head 10 can also start winding the strip-shaped article N.

It will be appreciated that this is in particular related to the ratio between the feed speed v_{f} with which the strip-shaped article is fed by the feed unit 2 and the displacement speed vₛₚ with which the winding heads move along the portion P11.

In fact, if the feed speed v_{f} is higher than the displacement speed vₛₚ, in that portion the strip-shaped article N can be wound at such a winding speed as to compensate for the difference between the two aforesaid speeds.

Thereby, the amount of strip-shaped article N which is fed is either wound or stored as illustrated above. As a result, the strip-shaped article N may be kept at a substantially constant tension by suitably acting on the movement speeds of the head while it is winding and/or holding the strip-shaped article N.

It will be appreciated that the feed speed v_{f} is preferably determined by the speed at which the delivery coils forming the delivery device 6 are rotated to unwind the strip, pushing, and then feeding, the strip into the feed unit 1 and then into the winding unit 3. More generally, such speed may be determined by the actuating mode of the delivery device 6.

At the same time, winding the strip-shaped article N via the winding heads 10 can also help determine the feed speed v_{f}, with a pull action on each strip. At the limit, if the coils, or other delivery device 6, are not motor-driven, and are therefore idle, the strip could be advanced solely by the winding action.

The tension of the strip is also governed by the balance between the action of the delivery device 6 and the winding of the strip-shaped article, conceptually similar to that illustrated in relation to the speeds.

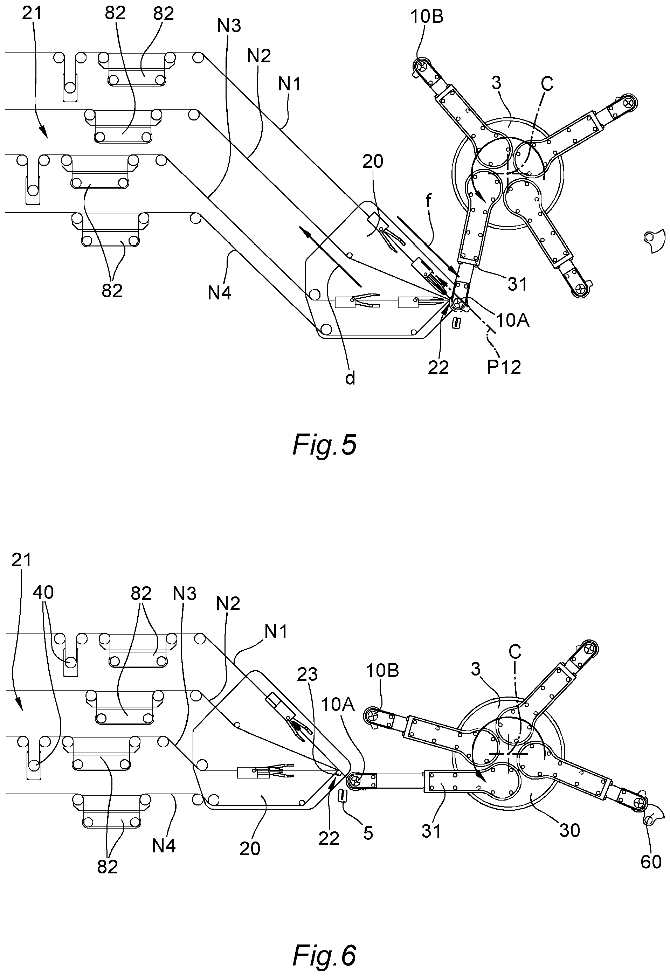

Referring now to Figure 5, having reached a limit position of displacement in the direction concordant with the feed direction f, the winding head 10A is displaced in the opposite direction along a second portion P12 of the operative segment P1.

In this case also the movement of the head 10A may advantageously be associated with a corresponding displacement of the movable portion 20 of the feed unit 2.

During the movement of the winding head 10A in the portion P12, the strip-shaped article N is wound by the head itself, preferably at a higher winding speed than that provided for the portion P11.

It will be appreciated that the displacement of the winding head 10 while performing this winding occurs in a direction discordant to the feed direction f.

The relevant portion P12 is also preferably substantially parallel to the feed direction f and, possibly, the displacement direction d.

Here, too, the same considerations as in the previous section concerning the term "substantially parallel" apply.

The amounts of strips stored in the previous step may therefore be wound while the winding head 10A moves along the portion P12.

Equivalent considerations in relation to the feed speed and the displacement speed of the head made with reference to the portion P11 also apply to this step.

The feed speed v_{f}, the winding speed vₐᵥᵥ and the displacement speed vₛₚ will preferably be such that the strip-shaped article N is subjected to a substantially constant tension.

As previously illustrated, in preferred embodiments this may be achieved by providing the feed speed v_{f} to be substantially equal to the sum of said winding speed vₐᵥᵥ and said displacement speed vₛₚ.

It will also be appreciated that advantageously, the rotatable body 30 of the movement device 3 proceeds with its continuous rotation motion, while the arm 31 is rotated in the opposite direction, thus performing a movement opposite to that performed during the movement along the portion P11.

In other words, along the portion P11 and the portion P12, the arm 31 swings back and forth in such a way that the winding head may perform the previously described movement and the winding of the strip-shaped article.

At a limit position along the segment P12, illustrated in Figure 6, the first winding head 6 may be moved away from the outlet section 22.

Such movement may take place by moving the head itself and/or displacing the movable portion 20.

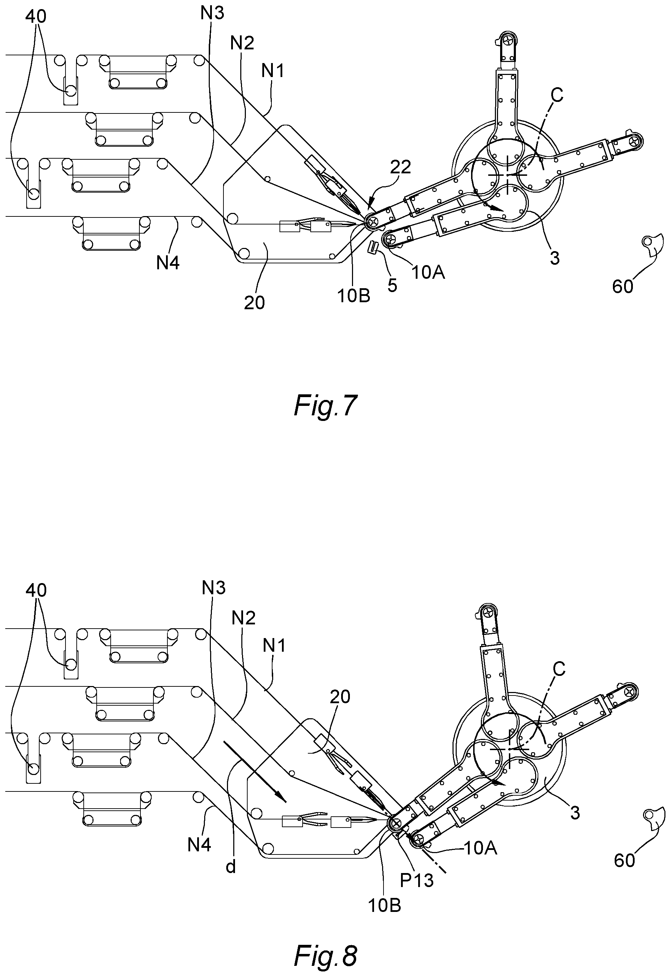

Therefore, as visible in Figure 7, a sufficient space may be provided such that a second winding head 10B, arranged upstream from the first winding head 10A along the path P, may be interposed between the first winding head 10A and the outlet section 22.

In fact, it should be noted that in preferred embodiments it may be provided that the distance between the first winding head 10A and the second winding head 10B is variable along the working path P, depending on the operating steps of the apparatus 100.

Thanks to this feature, it is possible to obtain the configuration illustrated by way of example in Figures 7 to 9, wherein the two heads 10A and 10B are at a minimum distance to allow the positioning of a cutting element 51 of the cutting device 5 between them and the second head 10B is in turn at a predetermined distance, preferably substantially equal to the minimum distance from the movable portion 20 and, more generally, from the feed unit 2.

The two heads are also preferably aligned along the feed direction of the strip-shaped article N. It is thereby possible to grab by means of the grabbing device 11 of the second winding head 10B a relative portion of the strip-shaped article N, as it may be seen from Figure 9 and as illustrated above.

The portion of the strip-shaped article N may in particular be grabbed as illustrated above, by using the pair of pins 12, 13.

In this condition, the strip-shaped article N is wound to form the coil B on the first winding head 10A and is simultaneously grabbed by the second winding head 10B.

In other words, the strip-shaped article N is simultaneously grabbed on both the first winding head 10A and the second winding head 10B.

Furthermore, still at such position, it is possible to cut the strip-shaped article N at an intermediate position between the first winding head 10A and the second winding head 10B.

For this purpose, a cutting device 5 may be provided which is configured in such a way as to cut said strip-shaped article N at a position downstream of said feed unit 2 and, advantageously, at the aforesaid position.

In fact, as it can be seen from the illustrated embodiments, the cutting device 5 advantageously cuts the strip-shaped article N, when the respective winding head 10 is positioned at said predetermined distance from said feed unit 2, advantageously substantially equal to the minimum distance compatible with the kinematic mechanisms determining the movement of the winding heads 10.

As already illustrated, concurrently with the cut, the second winding head 10B is moved closer to the first winding head 10A, being advantageously at the minimum distance from each other along the working path P when the cut of the strip-shaped article N is performed.

The cutting device 5 is illustrated in a preferred embodiment thereof in Figure 9.

Preferably, the cutting device 5 comprises a main body 50 supporting a cutting element 51.

In some embodiments, the winding head 10 comprises an abutment element 14 placed in such a position that the strip-shaped article N is interposed between the abutment element 14 and the cutting device 5.

The abutment element 14 preferably has a seat 14A configured to receive the cutting element 51. Thereby, when the cutting device 5 is moved closer to the abutment element 14, the main body 50 of the cutting device 5 may abut the abutment element 14, with the strip-shaped article N interposed, and the cutting element 51 may be received in the seat 14A, generating a pressure on the strip-shaped article N such as to cut it.

It should be noted that before cutting the strip-shaped article N, it may be provided that the conductor strips N1, N3 are interrupted and their advancement is stopped or slowed down by the gripper system 26 previously illustrated.

Thus, the cut carried out by the device 5 can only affect the separator strips N2, N4 that form the strip-shaped article N following the interruption of the conductor strips.

In particular, it is possible to see in Figures 7 and 8 the action of the grippers 26 on the conductor strips and the displacement of the movable rollers 40 relative to the position in Figure 6, in such a way as to store the strip according to what illustrated above.

In some embodiments, the cutting device 5 is also movable in a direction substantially parallel to the feed direction f. In general, it may be provided that the cutting device is movable with at least one component substantially parallel to that direction. For example, the cutting device 5 may be supported on the movable portion 20 or movable integrally thereto. It will be thereby possible to both move the cutting device 5 closer to the abutment element 14 and move it synchronously to the strip-shaped article N. In other words, the cutting device 5 copies the movement of the strip-shaped article N, moving synchronously thereto when it performs the cutting operation.

Also thanks to these features, it is possible to provide that the strip-shaped article N is fed with a feed speed v_{f} that is constantly greater than zero, and preferably substantially constant, as it is possible that the cut is performed while the strip-shaped article is also moving.

It should also be noted that the strips forming the strip-shaped article N may also be continuously advanced within the feed unit 2. In those embodiments wherein the conductor strips, or other strips forming the strip-shaped article, are provided to be interrupted, the continuous advancement will preferably be associated with the possibility of storing the strip. As regards the strip or strips for which no interruptions are provided, this/these may be advanced continuously through the outlet section 22, in continuity with the strip-shaped article N.

Once the strip-shaped article N has been cut, two flaps remain defined, one associated with the first winding head 10A which forms the end part of the coil wound in it, and one associated with the second winding head 10B which forms the initial part of the coil B that will be wound later. Preferably, the process of making the coil B provides a third portion P13 of the operative segment P1, preferably substantially parallel to said first and second portions P11, P12 and along which the winding head 10A moves after cutting the strip-shaped article N.

In preferred embodiments, the winding head moves again in a direction concordant with said feed direction f along said third portion P13.

Preferably, said movement device 3 is configured in such a way that when the first winding head 10A runs along said third portion P13, the second winding head 10, which has advantageously just grabbed the strip-shaped article N, runs along the first portion P11 performing, in sequence, the steps described above in relation to the first winding head 10A.

Along the portion P13, on the other hand, the first winding head completes the winding of the flap of strip-shaped article N resulting from the cut, finishing the manufacturing of the coil B.

As previously illustrated, the winding of the strip-shaped article N to make the coil B can take place in each of the three portions P11, P12, P13.

Preferably, winding mainly takes place, i.e. by a greater percentage amount, along the second portion P12.

However, winding can also take place partially in the other portions.

Indeed, in preferred embodiments, the strip is wound for an amount of between 5% and 15%, preferably 10%, of the total length of the strip-shaped article forming a single coil along the first portion P11, for an amount of between 70% and 90%, preferably 80%, along the second portion P12 and for an amount of between 5% and 15%, preferably 10%, along the third portion P13. The displacement of the first winding head 10A then continues until it reaches the unloading area 7, where the coil B is unloaded from the winding unit 1.

In some embodiments, the apparatus 100 may comprise additional working units 60 at which the winding head 10 passes with the coil B before arriving at the unloading area 7.

For exemplary purposes, the additional working unit 60 may comprise a bending device configured to bend the two opposite axial ends of the coil. In fact, it may be provided that the conductor strips each protrude axially, one on one side and the other on the other side, and are bent in such a way as to form a single portion of a conductor intended to be connected to an anode/cathode end in the cell once assembled.

In some embodiments, the application of a coil closing element B, configured in such a way as to prevent the coil from unwinding once unloaded from the winding head 10, may also be provided. Such a closing element may, for example, be represented by a strip applied circumferentially to the coil to close the end flap of the strip-shaped element.

After unloading the coil, the winding head 10A begins to pass along the reset segment P2 to displace from a unloading position to a grabbing position in which the winding head 10 may grab the portion of the strip-shaped article N as illustrated above.

The steps described above may then be repeated cyclically for each of the winding heads 10 included in winding unit 1.

As mentioned above, Figure 10 illustrates a possible illustrative variant of the apparatus according to the present invention.

In this variant, it is provided that the movement device 3 moves integrally with the movable portion 20 of the winding unit 2.

For this purpose, the movement device 3 may be rotatably supported around the rotation axis C on the movable portion 20.

In the embodiments wherein the movement device 3 may move as a whole, as in the example illustrated wherein it moves along the displacement direction d, it may therefore be provided that the winding heads 10 remain in a substantially fixed position in relation to the rotating body 3 and that, consequently, their distance from each other remains unchanged.

In other words, the movement heads 10 may in this case move not only by rotating on themselves for winding the strip-shaped article N, but also as a result of the movement of the rotating body of the movement device 3, preferably of its linear movement. In the embodiment illustrated in Figure 10, as well as more generally in other preferred embodiments not illustrated, such movement includes both the rotation around the axis C and the translation along the displacement direction d.

It will, however, be appreciated that, more generally, the movement of the movement heads 10 may in this case be determined by any rotation and any translation or further rotation, always in addition to the rotation carried out to wind the strip-shaped article N.

Such movements, however, do not determine a change in the mutual distance between the winding heads 10.

However, a combination of this embodiment and those previously described, in which the distance between the heads is variable, may be provided.

More generally, all the elements described so far in relation to the embodiment illustrated in Figure 10 may be combined with all the possible embodiments provided by the present invention and described above.

Obviously, in order to meet specific and contingent application needs, a person skilled in the art may make further modifications and variations to the above-described invention that are nevertheless within the scope of protection as defined by the following claims.

## Claims

1. Apparatus (100) for making a coil (B), preferably for an electrochemical cell intended for the production of batteries, said apparatus (100) comprising:
- A feed unit (2) configured to feed at least one strip-shaped article (N), comprising a plurality of strips (N1, N2, N3, N4), wherein said feed unit (2) comprises an outlet section (22) through which said strip-shaped article (N) is fed to said winding unit (1) and an inlet section (21) configured to receive said strips from a respective delivery device (6), said feed unit (2) comprising a movable portion (20) at which said outlet section (22) is formed;
- A winding unit (1) that includes:
∘ a plurality of winding heads (10) configured to wind said strip-shaped article (N) so as to make said coil (B);
∘ A movement device (3) for moving said winding heads (10) configured to displace said winding heads (10) along a working path (P);
- a storage device (4) configured so as to store a variable amount of said strips (N1, N2, N3, N4) between said inlet section (21) and said outlet section (22);
wherein said winding heads (10) and said movable portion (20) are movable in a coordinated manner, respective feed paths (8) being defined for each of said strips, said feed paths comprising a respective storage segment (81), said storage device (4) being configured so as to simultaneously vary the longitudinal extension of said storage segments (81).

2. Apparatus (100) according to the preceding claim, wherein said storage segments (81) extend between a respective pair of diverting rollers (24, 25).

3. Apparatus (100) according to the preceding claim, wherein said diverting rollers (24, 25) are idle.

4. Apparatus (100) according to claim 2 or 3, wherein a diverting roller of said pair is supported on said movable portion (20).

5. Apparatus according to any one of the preceding claims, wherein said storage segments (81) are substantially parallel to each other.

6. Apparatus according to any one of the preceding claims, wherein said feed unit (2) comprises holding devices (26A) for holding said strips, each configured so as to slow down or stop feeding a respective one of said plurality of strips through said outlet section (22), said storage device (4) being configured so as to store said strip when said holding device (26A) slows down or stops feeding said strip.

7. Apparatus according to any one of the preceding claims, wherein said feed unit (2) comprises a coupling roller (23), said strips (N1, N2, N3, N4) being arranged so as to converge towards said coupling roller (23) on which said strips (N1, N2, N3, N4) are partially wound so that, downstream of said coupling roller (23) said strips are grouped together to form said strip-shaped article (N).

8. Apparatus according to the preceding claim, wherein said outlet section (22) is defined at said coupling device (23).

9. Apparatus according to the preceding claim, wherein said coupling roller (23) is connected to said movable portion (20).

10. Method (100) for making a coil (B), for an electrochemical cell intended for producing batteries, said coil (B) being made by winding at least one strip-shaped article (N), said strip-shaped article (N) comprising a plurality of strips (N1, N2, N3, N4), said method (100) comprising:
- providing at least one winding head (10) movable along a working path (P);
- feeding said strip-shaped article by a feed unit (2) which comprises a movable portion (20) at which an outlet section (22) is formed, said feeding said strip-shaped article comprising combining said strips so as to form said strip-shaped article (N) and storing said strips (N1, N2, N3, N4) during an advancement thereof between an inlet section (21), through which each of said strips is individually provided, and said outlet section (22);
- winding said strip-shaped article (N) by said winding head (10);
- simultaneously moving said outlet section (22) and said winding head (10) to which said strip-shaped article is fed, keeping them at a predetermined distance;
- storing a variable amount of said strips in a position upstream of said winding head (10), simultaneously varying the length of a respective storage segment (81) of each of said strips.

11. Method according to the preceding claim, comprising slowing down or stopping feeding one or more of said strips, said variable amount of one or more of said strips being stored when said feeding is slowed down or stopped.

12. Method according to any one of claims 10 to 11, comprising keeping said storage segments (81) substantially parallel to each other during said varying said length of said storage segments.

13. Method according to any one of claims 10 to 12, wherein storing said strips comprises varying a distance run by said strips between said inlet section (21) and said outlet section (22).

14. Method according to any one of claims 10 to 13, wherein said storage segments (81) extend between a respective pair of diverting rollers (24, 25).

15. Method according to the preceding claim, wherein said diverting rollers are idle (24, 25).
